# EUROPEAN PATENT APPLICATION

(11) **EP 2 731 235 A2**
(43) Date of publication of application: **14.05.2014**
(21) Application number: 13190507.7
(22) Date of filing: 28.10.2013
(51) Int. Cl.: H02K 3/34

(54) **Interphase insulating sheet for rotating electric machine, and motor-driven compressor**

(30) Priority: 07.11.2012 JP 2012245274
(71) Applicant: KABUSHIKI KAISHA TOYOTA JIDOSHOKKI, Kariya-shi, Aichi-ken 448-8671 (JP)
(72) Inventor: Horiba, Tatsuya, Aichi-ken, 448-8671 (JP); Okuyama, Shinichi, Aichi-ken, 448-8671 (JP); Hirano, Taizo, Aichi-ken, 448-8671 (JP); Fukasaku, Hiroshi, Aichi-ken, 448-8671 (JP)
(74) Representative: HOFFMANN EITLE

(57) **Abstract**

An interphase insulating sheet for a rotating electric machine includes a pair of insulating portions (32-35) and a plurality of bridge pieces (36, 38). The insulating portions perform interphase insulation between coil ends of coils (25) protruding from both ends of a stator core (22). Each insulating portion (32-35) has bridge bases (32k-35k). The bridge pieces (36, 38) are each inserted in one of slots. Each bridge piece (36, 38) extends from a bridge base of one of the insulating portions to a bridge base of the other insulating portion. Each insulating portion (32-35) has an annular shape having stacked parts (32a-35a) that include a bridge base and overlap with each other by a predetermined margin. In the circumferential direction of each insulating portion, the dimension of the stacked parts is set to be less than or equal to the dimension of the bridge pieces.

## Description

### BACKGROUND OF THE INVENTION

The present invention relates to an interphase insulating sheet for a rotating electric machine and a motor-driven compressor.

Japanese Laid-Open Patent Publication No. 2009-77582 discloses an interphase insulating sheet (interphase insulating paper) arranged between coil ends of different phases, or between coil ends of a U-phase coil, a V-phase coil, and a W-phase coil. The interphase insulating sheet is formed by a pair of insulating portions, which performs interphase insulation between the coil ends, and bridge pieces, which are inserted in slots between teeth of a stator core and connect the insulating portions to each other. Each insulating portion is formed by stacking ends of a band-like insulating sheet and heat-welding the stacked ends to obtain an annular body.

The U-phase coil is passed through a first group of slots. Subsequently, the bridge pieces of the interphase insulating sheet for insulating between the coil ends of the U-phase coil and the coil ends of the V-phase coil are inserted into a second group of slots, into which the V-phase coil is inserted. Thereafter, the V-phase coil is passed through the second slots. As a result, a pair of insulating portions is located between the coil ends of the U-phase coil and the coil ends of the V-phase coil. Therefore, the coil ends of the U-phase coil and the coil ends of the V-phase coil are insulated from each other by the pair of insulating portions.

Subsequently, the bridge pieces of the interphase insulating sheet for insulating between the coil ends of the V-phase coil and the coil ends of the W-phase coil are inserted into a third group of slots, into which the W-phase coil is inserted. Thereafter, the W-phase coil is passed through the third slots. As a result, a pair of insulating portions is located between the coil ends of the V-phase coil and the coil ends of the W-phase coil. Therefore, the coil ends of the V-phase coil and the coil ends of the W-phase coil are insulated from each other by the pair of insulating portions.

At the stacked parts of each insulating portion, the ends of the insulating sheet are overlaid onto each other. This makes the stacked parts less flexible than the remaining parts of the insulating portion. That is, the stacked parts resist flexing in the insulating portion. For example, the stacked parts of the insulating portion that insulate a coil end of the U-phase coil and a coil end of the V-phase coil from each other pass through a third slot in some cases. The stacked parts resist flexing. Thus, when the W-phase coil is inserted into the third slot, the W-phase coil and the stacked parts contact each other, which hampers the insertion of the W-phase coil into the third slot. In an attempt to overcome such a drawback, the dimension of the stacked parts may be minimized in the circumferential direction of the insulating portion, so that the parts that resist flexing are minimized in the insulating portion. However, the smaller the dimension of the stacked parts, the lower the strength of the stacked parts in the insulating portion becomes.

### SUMMARY OF THE INVENTION

Accordingly, it is an objective of the present invention to provide an interphase insulating sheet for a rotating electric machine and a motor-driven compressor that minimize the size of parts that resist flexing in an insulating portion and ensure the strength of stacked parts in the insulating portion.

To achieve the foregoing objective and in accordance with one aspect of the present invention, an interphase insulating sheet for a rotating electric machine is provided. The rotating electric machine includes a stator having an annular stator core. The stator core includes a plurality of teeth and has ends facing opposite directions in an axial direction of the stator core. The teeth are arranged along an inner circumference of the stator core in the circumferential direction. A slot is formed between adjacent teeth. A coil is wounded about the slots by wave winding. The interphase insulating sheet includes a pair of insulating portions and a plurality of bridge pieces. The insulating portions perform interphase insulation between coil ends of the coil, which protrude from the ends of the stator core, and each insulating portion has bridge bases. Each bridge piece is fitted in one of the slots. Each bridge piece extends from one of the bridge bases of one of the insulating portions to one of the bridge bases of the other insulating portion. Each insulating portion has an annular shape and includes stacked parts that include a respective one of the bridge bases, and the stacked parts overlap with each other by a predetermined margin. In the circumferential direction of each insulating portion, the dimension of the stacked parts is set to be less than or equal to the dimension of the bridge pieces.

### BRIEF DESCRIPTION OF THE DRAWINGS

The invention, together with objects and advantages thereof, may best be understood by reference to the following description of the presently preferred embodiments together with the accompanying drawings in which:
Fig. 1A is a cross-sectional side view illustrating a motor-driven compressor according to one embodiment;
Fig. 1B is a perspective view illustrating an interphase insulating sheet;
Fig. 2 is a cross-sectional view taken along line 2-2 of Fig. 1A;
Fig. 3 is an explanatory diagram of a stator viewed from the front, showing wave winding;
Fig. 4 is an explanatory diagram of the stator as viewed from behind, showing wave winding;
Fig. 5 is a developed view illustrating a part of the interphase insulating sheet;
Fig. 6 is a cross-sectional side view illustrating an ultrasonic-welding apparatus for performing ultrasonic-welding;
Fig. 7A is a cross-sectional side view illustrating a part of an interphase insulating sheet according to another embodiment;
Fig. 7B is a cross-sectional side view illustrating an ultrasonic-welding apparatus for performing ultrasonic-welding; and
Fig. 8 is a developed view illustrating a part of an interphase insulating sheet according to a further embodiment.

### DETAILED DESCRIPTION OF THE PREFERRED EMBODIMENTS

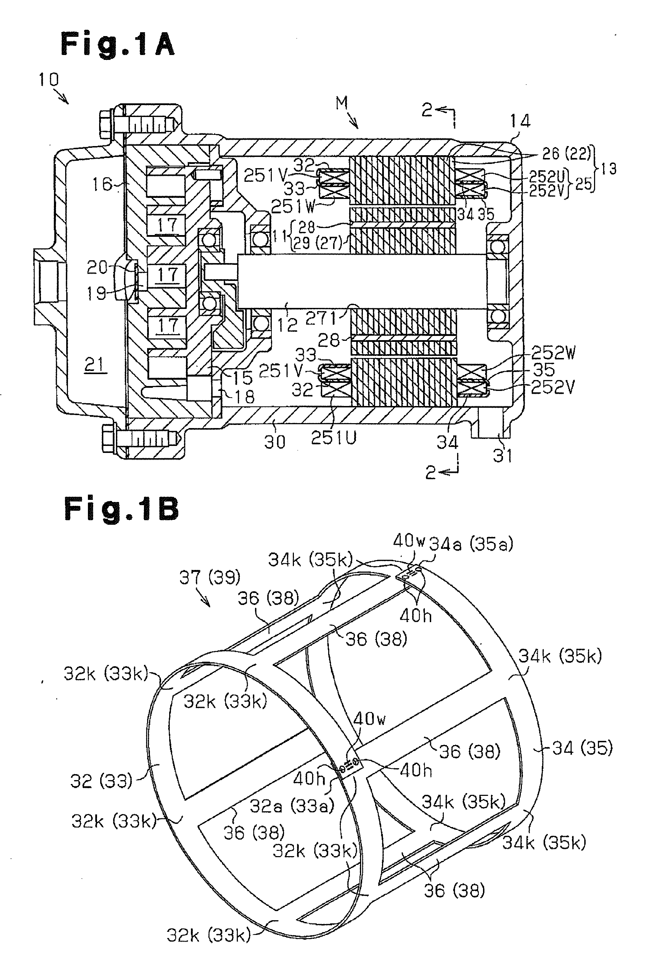

One embodiment will now be described with reference to Figs. 1A to 6. In the following description, the front side and the rear side correspond to the left side and the right side in Fig. 1A, respectively.

A motor-driven compressor 10 shown in Fig. 1A is a scroll motor-driven compressor. The motor-driven compressor 10 includes a motor housing 14, a rotating electric machine M, a compression operation body, which is a movable scroll 15 in this embodiment, and a fixed scroll 16. The rotating electric machine M includes a rotor 11, a rotary shaft 12, and a stator 13. The rotor 11 is fixed to the rotary shaft 12, and the stator 13, which is a component of the rotating electric machine M, is securely fitted to the inner circumferential surface of the motor housing 14. The movable scroll 15 is caused to orbit by rotation of the rotary shaft 12, which is a component of the rotating electric machine M. Accordingly, the volume of each compression chamber 17 between the movable scroll 15 and a fixed scroll 16 decreases.

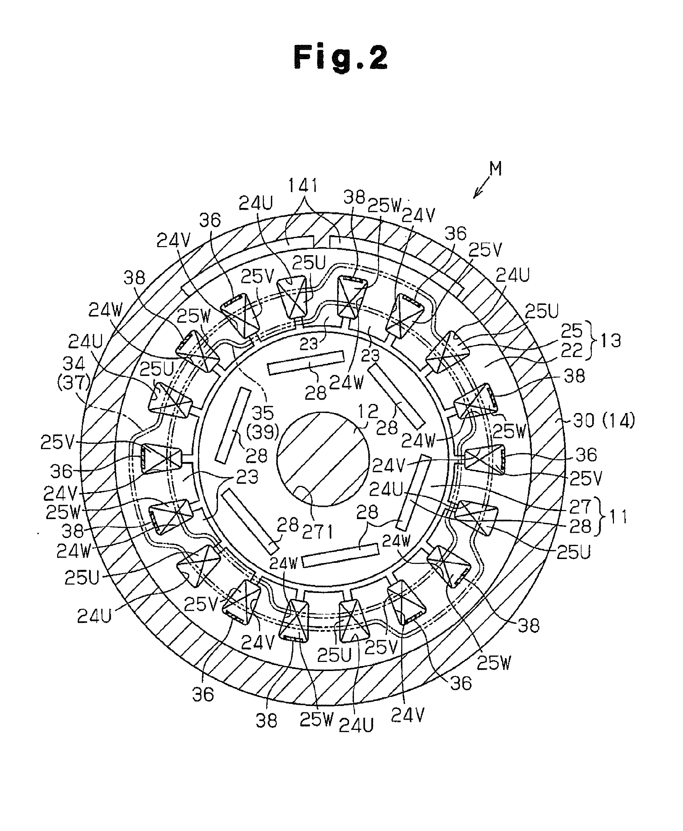

An introduction port 31 is provided in a circumferential wall 30 of the motor housing 14. The introduction port 31 is connected to an external refrigerant circuit, which is not shown, and refrigerant (gas) is introduced into the motor housing 14 from the external refrigerant circuit via the introduction port 31. The refrigerant gas introduced to the motor housing 14 is drawn into the compression chambers 17 via a passage 141 (shown in Fig. 2), which is provided between the inner circumferential surface of the motor housing 14 and the outer circumferential surface of the stator 13, and a suction port 18 by orbiting motion of the movable scroll 15 (suction operation). The refrigerant in the compression chambers 17 is compressed by orbiting motion of the movable scroll 15 (discharge operation), and is discharged into a discharge chamber 21 through a discharge port 19 while flexing a discharge valve flap 20. The refrigerant in the discharge chamber 21 flows out to the external refrigerant circuit, and returns to the motor housing 14.

As shown in Fig. 2, the stator 13, which is a component of the rotating electric machine M, includes an annular stator core 22 and coils 25. The stator core 22 includes a plurality of teeth 23, which are arranged along the inner circumference of the stator core 22, and slots 24U, 24V, 24W, which are formed between adjacent teeth 23. The coils 25 pass through the slots 24U, 24V, 24W. In the present embodiment, the number of the teeth 23 and the number of the slots 24U, 24V, 24W are each eighteen. The slots 24U, 24V, 24W are arranged at equal intervals along the circumferential direction of the annular stator 13.

As shown in Fig. 1A, the stator core 22 is configured by laminating several core plates 26 made of magnetic material (steel plates). The rotor 11 includes a rotor core 27 and a plurality of permanent magnets 28 embedded in the rotor core 27. The rotor core 27 is configured by laminating several core plates 29 made of magnetic material (steel plates). A shaft hole 271 is formed at the central portion of the rotor core 27 to extend through the rotor core 27, and the rotary shaft 12 extends through and is fixed to the shaft hole 271.

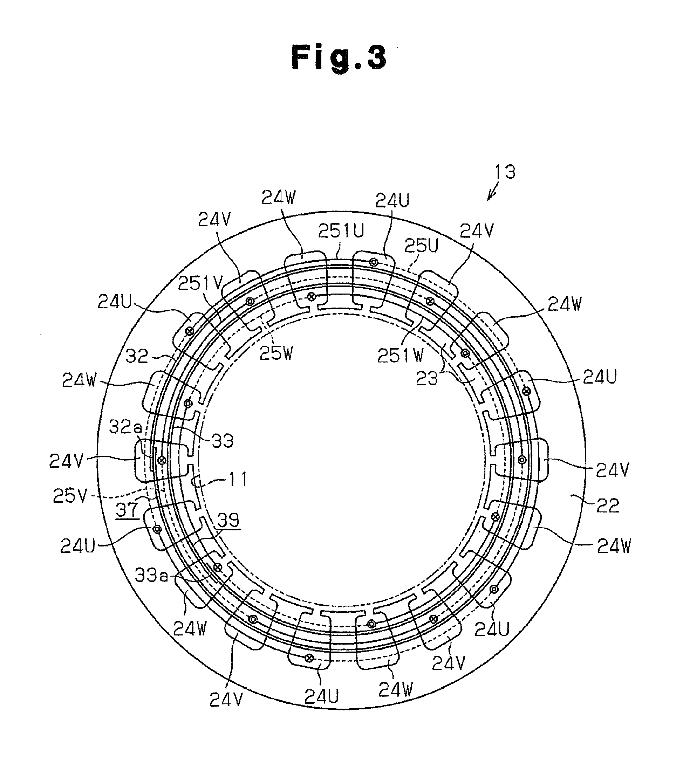

Fig. 3 is a schematic diagram illustrating the stator 13 as viewed from the front. The coils 25 are passed through the slots 24U, 24V, and 24W by wave winding. In the slots 24U, 24V and 24W, the coils 25 are separated from the inner walls of the slots 24U, 24V, and 24W by an insulating sheet (not shown).

A U-phase coil 25U passes through a first group of slots 24U. A V-phase coil 25V passes through a second group of slots 24V, and a W-phase coil 25W passes through a third group of slots 24W. Parts of the phase coils 25U, 25V, 25W that are represented by solid lines are parts that are arranged on an end face of the stator core 22 at the near side (front side) of the stator 13, and parts of the phase coils 25U, 25V, 25W that are represented by broken lines are parts that are arranged on an end face of the stator core 22 at the far side (rear side) of the stator 13. Parts of each of the phase coils 25U, 25V, 25W between the solid line parts and the broken line parts are parts that pass through the slots 24U, 24V, 24W.

At the front side of the stator 13, first coil ends 251 U of the U-phase coil 25U protrude from the slots 24U, and first coil ends 251V of the V-phase coil 25V protrude from the slots 24V. A first insulating portion 32 is arranged between the first coil ends 251 U of the U-phase coil 25U and the first coil ends 251V of the V-phase coil 25V. The first insulating portion 32 is arranged to wrap around the rotor 11 once. At the front side of the stator 13, first coil ends 251 V of the V-phase coil 25V protrude from the slots 24V, and first coil ends 251W of the W-phase coil 25W protrude from the slots 24W. A first insulating portion 33 is arranged between the first coil ends 251 V of the V-phase coil 25V and the first coil ends 251 W of the W-phase coil 25W. The first insulating portion 33 is arranged to wrap around the rotor 11 once. The first insulating portion 32 is arranged radially outward of the first insulating portion 33. As a result, the inside first insulating portion 33 is surrounded by the outside first insulating portion 32. The first insulating portions 32 and 33 are both made of a synthetic plastic.

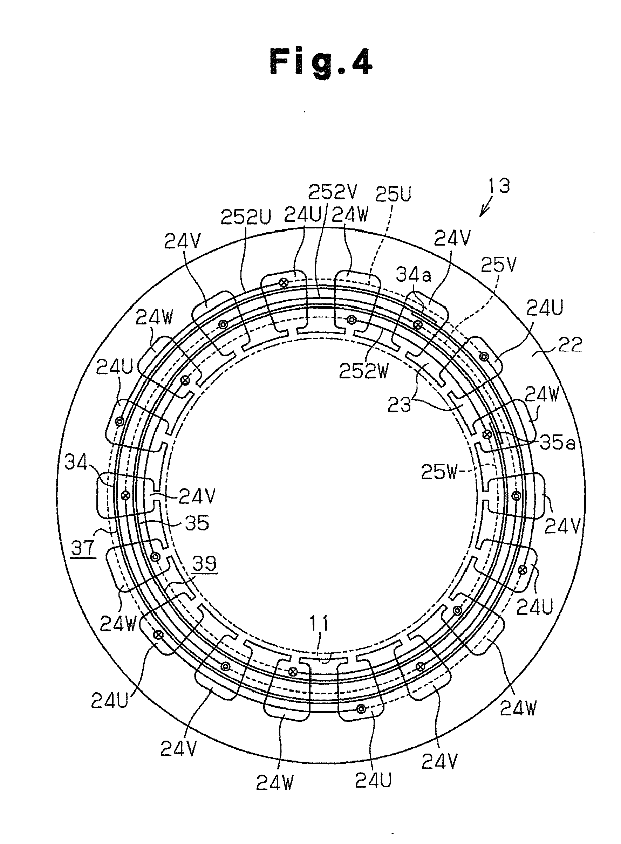

Fig. 4 is a schematic diagram illustrating the stator 13 as viewed from the rear side. Parts of the phase coils 25U, 25V, 25W that are represented by solid lines are parts that are arranged on an end face of the stator core 22 at the rear side of the stator 13, and parts of the phase coils 25U, 25V, 25W that are represented by broken lines are parts that are arranged on an end face of the stator core 22 at the front side of the stator 13.

At the rear side of the stator 13, second coil ends 252U of the U-phase coil 25U protrude from the slots 24U, and second coil ends 252V of the V-phase coil 25V protrude from the slots 24V. A second insulating portion 34 is arranged between the second coil ends 251 U of the U-phase coil 25U and the second coil ends 251V of the V-phase coil 25V. The second insulating portion 34 is arranged to wrap around the rotor 11 once. At the rear side of the stator 13, second coil ends 252V of the V-phase coil 25V protrude from the slots 24V, and second coil ends 252W of the W-phase coil 25W protrude from the slots 24W. A second insulating portion 35 is arranged between the second coil ends 252V of the V-phase coil 25V and the second coil ends 252W of the W-phase coil 25W. The second insulating portion 35 is arranged to wrap around the rotor 11 once. The second insulating portion 34 is arranged radially outward of the second insulating portion 35. As a result, the inside second insulating portion 35 is surrounded by the outside second insulating portion 34. The second insulating portions 34 and 35 are both made of a synthetic plastic.

As shown in Fig. 1B, the first insulating portion 32 and the second insulating portion 34 are connected to each other by bridge pieces 36 (six in this embodiment). Each bridge piece 36 extends from a bridge base 32k of the first insulating portion 32 to a bridge base 34k of the second insulating portion 34 and is formed integrally with the first insulating portion 32 and the second insulating portion 34. The first insulating portion 32 and the second insulating portion 34 have stacked parts 32a, 34a, which are overlapped by a predetermined margin and include bridge bases 32k, 34k. The first insulating portion 32 and the second insulating portion 34 are formed to have annular shapes by heat-welding the stacked parts 32a, 34a to each other.

As shown in Fig. 2, the bridge pieces 36 are inserted in the slots 24V, in which the V-phase coil 25V is inserted. The first insulating portion 32, the second insulating portion 34, and the bridge pieces 36 form an interphase insulating sheet 37 that insulates the coil ends of the coils 25 of different phases from each other. The bridge pieces 36 are pushed radially outward by the V-phase coil 25V in the slots 24V, so that the position of the interphase insulating sheet 37 is determined.

As shown in Fig. 1B, the first insulating portion 33 and the second insulating portion 35 are coupled to each other by bridge pieces 38 (six in this embodiment as shown in Fig. 2). Each bridge piece 38 extends from a bridge base 33k of the first insulating portion 33 to a bridge base 35k of the second insulating portion 35 and is formed integrally with the first insulating portion 33 and the second insulating portion 35. The first insulating portion 33 and the second insulating portion 35 have stacked parts 33a, 35a, which are overlapped by a predetermined margin and include bridge bases 33k, 35k. The first insulating portion 33 and the second insulating portion 35 are formed to have annular shapes by heat-welding the stacked parts 33a, 35a to each other.

As shown in Fig. 2, the bridge pieces 38 are inserted in the slots 24W, in which the W-phase coil 25W is inserted. The first insulating portion 33, the second insulating portion 35, and the bridge pieces 38 form an interphase insulating sheet 39 that insulates the coil ends of the coils 25 of different phases from each other. The bridge pieces 38 are pushed radially outward by the W-phase coil 25W in the slots 24W, so that the position of the interphase insulating sheet 39 is determined.

As shown in Fig. 3, the stacked parts 32a of the first insulating portion 32 are located at a position where the first coil end 251V of the V-phase coil 25V is arranged inside the first insulating portion 32, and where the first coil end 251 U of the U-phase coil 25U is not located outside the first insulating portion 32. The stacked parts 33a of the first insulating portion 33 are located at a position where the first coil end 251 W of the W-phase coil 25W is arranged inside the first insulating portion 33, and where the first coil end 251V of the V-phase coil 25V is not located outside the first insulating portion 33.

As shown in Fig. 4, the stacked parts 34a of the second insulating portion 34 are located at a position where the second coil end 252V of the V-phase coil 25V is arranged inside the second insulating portion 34, and where the second coil end 252U of the U-phase coil 25U is not located outside the second insulating portion 34. The stacked parts 35a of the second insulating portion 35 are located at a position where the second coil end 252W of the W-phase coil 25W is arranged inside the second insulating portion 35, and where the second coil end 252V of the V-phase coil 25V is not located outside the second insulating portion 35.

Since the configuration of the interphase insulating sheet 39 and that of the interphase insulating sheet 37 are the same, only the interphase insulating sheet 37 will be discussed below. Since the stacked parts 32a of the first insulating portion 32 and the stacked parts 34a of the second insulating portion 34 have the same configuration, only the stacked parts 32a of the first insulating portion 32 will be discussed below.

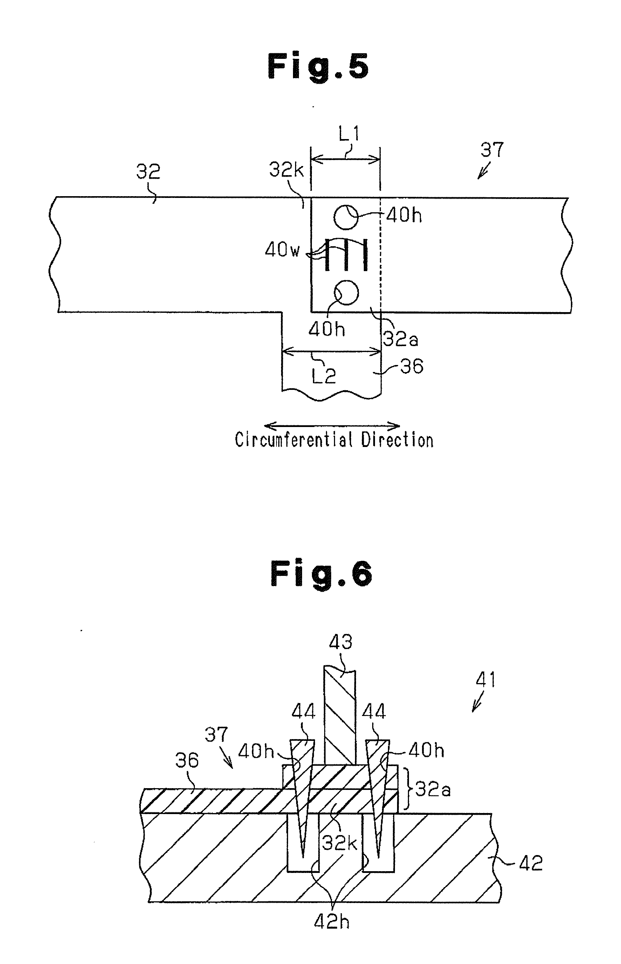

As shown in Fig. 5, weld parts 40w are formed at the stacked parts 32a. The first insulating portion 32 is formed to have an annular shape by connecting the stacked parts 32a to each other at the weld parts 40w. In the circumferential direction of the first insulating portion 32, the dimension L1 of the stacked parts 32a is set to be shorter than the dimension L2 of bridge pieces 36. Two through holes 40h are formed in the stacked parts 32a.

As shown in Fig. 6, an ultrasonic-welding apparatus 41 is used for heat-welding the stacked parts 32a to each other. The ultrasonic-welding apparatus 41 includes an iron-based ultrasonic-welding anvil 42 and an ultrasonic horn 43. The upper surface of the ultrasonic-welding anvil 42 is a flat surface. Two insertion holes 42h are formed in the upper surface of the ultrasonic-welding anvil 42. The lower surface of the ultrasonic horn 43 is a flat surface parallel with the upper surface of the ultrasonic-welding anvil 42.

When heat-welding the stacked parts 32a using the ultrasonic-welding apparatus 41, the stacked parts 32a of the first insulating portion 32 are placed on the upper surface of the ultrasonic-welding anvil 42, and needle-like members 44 are inserted into the stacked parts 32a. The distal ends of the needle-like members 44 are inserted into the insertion holes 42h of the ultrasonic-welding anvil 42. Insertion of the two needle-like members 44 into the stacked parts 32a forms two through holes 40h in the stacked parts 32a. With the needle-like members 44 inserted in the through holes 40h, the ultrasonic horn 43 is placed on the upper surface of the stacked parts 32a. Accordingly, the stacked parts 32a are sandwiched between the ultrasonic-welding anvil 42 and the ultrasonic horn 43 and welded to each other.

At this time, since the needle-like members 44 are inserted in the through holes 40h of the stacked parts 32a, the stacked parts 32a are prevented from displaced from each other when the stacked parts 32a are heat-welded using the ultrasonic-welding apparatus 41. This allows the stacked parts 32a to be easily welded to each other. Thus, the needle-like members 44 correspond to position-determining members in the present embodiment.

Operation of the present embodiment will now be described.

In the circumferential direction of the first insulating portion 32, the dimension L1 of the stacked parts 32a is set to be shorter than the dimension L2 of bridge pieces 36. Thus, compared to a case in which, for example, the dimension L1 of the stacked parts 32a in the circumferential direction of the first insulating portion 32 is set to be longer than the dimension L2 of the bridge pieces 36, the dimension L1 of the stacked parts 32a is short. As a result, the part that resists flexing is minimized in the first insulating portion 32. Therefore, for example, when the V-phase coil 25V is inserted into the slot 24V, the V-phase coil 25V and the stacked parts 32a are prevented from interfering each other. This ensures smooth entry of the V-phase coil 25V into the slot 24V.

Also, in the circumferential direction of the first insulating portion 32, the bridge bases 32k have a higher strength than the remaining portions of the first insulating portion 32. Since the stacked parts 32a overlap with one of the bridge bases 32k in the circumferential direction of the first insulating portion 32, the strength of the stacked parts 32a in the first insulating portion 32 is greater than that in a case in which the stacked parts 32a are formed in another part in the first insulating portion 32.

Further, the stacked parts 32a of the first insulating portion 32 are located at a position where the first coil end 251 V of the V-phase coil 25V is arranged inside the first insulating portion 32, and where the first coil end 251 U of the U-phase coil 25U is not located outside the first insulating portion 32. That is, the stacked parts 32a are located at a position where the first coil end 251 U of the U-phase coil 25U and the first coil end 251 V of the V-phase coil 25V are not permitted to be short-circuited via the through holes 40h. Thus, even though the through holes 40h are formed in the stacked parts 32a, the first insulating portion 32 ensures insulation between the first coil end 251 U of the U-phase coil 25U and the first coil end 251V of the V-phase coil 25V.

The stacked parts 33a of the first insulating portion 33 of the interphase insulating sheet 39 are located at a position where the first coil end 251V of the V-phase coil 25V and the first coil end 251W of the W-phase coil 25W are not permitted to be short-circuited via the through holes 40h. Thus, even though the through holes 40h are formed in the stacked parts 33a, the first insulating portion 33 ensures insulation between the first coil end 251 V of the V-phase coil 25V and the first coil end 251W of the W-phase coil 25W.

Further, the first insulating portion 32 of the interphase insulating sheet 37 is located outside the stacked parts 33a of the first insulating portion 33. That is, the stacked parts 33a are located at a position where the first coil end 251 U of the U-phase coil 25U and the first coil end 251W of the W-phase coil 25W are not permitted to be short-circuited via the through holes 40h. Thus, even though the through holes 40h are formed in the stacked parts 33a, the first insulating portions 32, 33 ensure insulation between the first coil end 251 U of the U-phase coil 25U and the first coil end 251W of the W-phase coil 25W.

The above described embodiment provides the following advantages.
(1) In the circumferential direction of the first insulating portion 32, the dimension L1 of the stacked parts 32a is set to be shorter than the dimension L2 of bridge pieces 36. Thus, compared to a case in which, for example, the dimension L1 of the stacked parts 32a in the circumferential direction of the first insulating portion 32 is set to be longer than the dimension L2 of the bridge pieces 36, the dimension L1 of the stacked parts 32a is short. As a result, the part that resists flexing can be minimized in the first insulating portion 32. Also, in the circumferential direction of the first insulating portion 32, the bridges 32k have a higher strength than the remaining portions of the first insulating portion 32. Since the stacked parts 32a overlap with a bridge base 32k in the circumferential direction of the first insulating portion 32, the strength of the stacked parts 32a in the first insulating portion 32 is greater than that in a case in which the stacked parts 32a are formed in another part in the first insulating portion 32.
(2) At this time, since the needle-like members 44 are inserted in the through holes 40h of the stacked parts 32a, the stacked parts 32a are prevented from displaced from each other when the stacked parts 32a are heat-welded using the ultrasonic-welding apparatus 41. This allows the stacked parts 32a to be easily welded to each other.
(3) The stacked parts 32a are located at a position where the first coil end 251 U of the U-phase coil 25U and the first coil end 251V of the V-phase coil 25V are not permitted to be short-circuited via the through holes 40h. Thus, even though the through holes 40h are formed in the stacked parts 32a, the first insulating portion 32 ensures insulation between the first coil end 251 U of the U-phase coil 25U and the first coil end 251 V of the V-phase coil 25V.
(4) The stacked parts 32a overlap with a bridge base 32k in the circumferential direction of the first insulating portion 32. In the circumferential direction of the first insulating portion 32, the bridges 32k resist flexing compared to the remaining portions of the first insulating portion 32. Therefore, compared to a case in which the stacked parts 32a overlap with another part in the first insulating portion 32, the part of the first insulating portion 32 that resists flexing can be reduced.
(5) The through holes 40h are formed in the stacked parts 32a. This allows refrigerant to flow through the through holes 40h. Therefore, heat is effectively transferred from the coil 25 to the interphase insulating sheet 37 via the refrigerant.
(6) The rotating electric machine M with wave winding that has low pulsation (low vibration) is suitable to be applied to the motor-driven compressor 10. That is, in the motor-driven compressor 10, there is a great demand for reducing size in addition to reducing noise and vibration. The rotating electric machine M with wave winding according to the preferred embodiment is suitable for such demand. The motor-driven compressor 10 using the rotating electric machine M with wave winding is particularly suitable for vehicle motor-driven compressors that have particularly great demands.

The above described embodiment may be modified as follows.

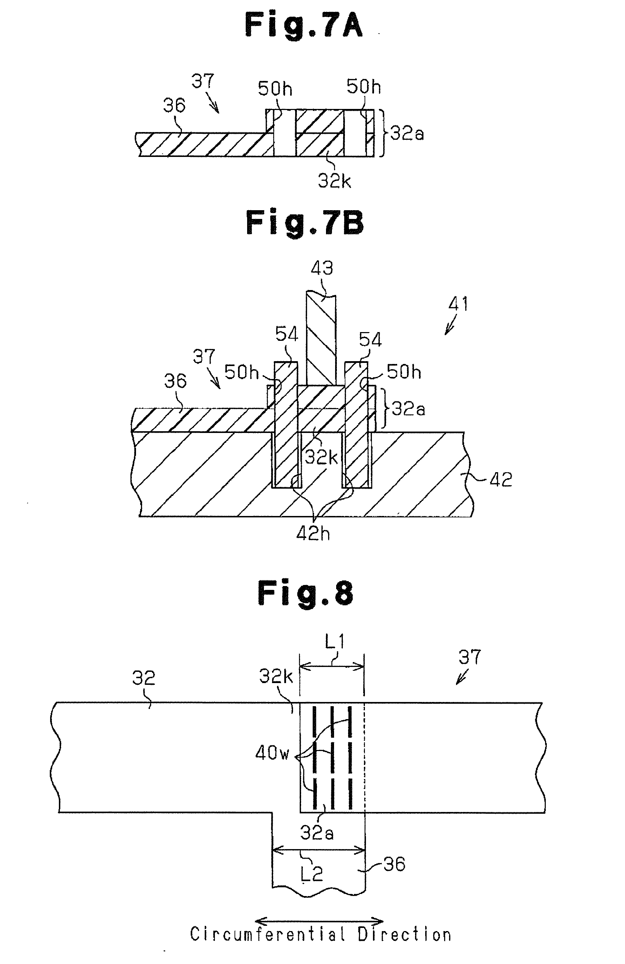

Figs. 7A and 7B illustrate a modified embodiment. In this embodiment, through holes 50h are formed in the stacked parts 32a in advance. With position-determining pins 54 inserted in the through holes 50h, an ultrasonic horn 43 is placed on the upper surface of the stacked parts 32a. Then, the stacked parts 32a are sandwiched between the ultrasonic-welding anvil 42 and the ultrasonic horn 43 and welded to each other. In this configuration, since the position-determining pins 54 are inserted in the through holes 50h of the stacked parts 32a, the stacked parts 32a are prevented from displaced from each other when the stacked parts 32a are heat-welded using the ultrasonic-welding apparatus 41. This allows the stacked parts 32a to be easily welded to each other. The position-determining pins 54 correspond to position-determining members.

As shown in Fig. 8, the through holes 40h may be omitted from the stacked parts 32a. In this case, the area of the weld parts 40w can be increased so that the welding of the stacked parts 32a is reinforced.

In the illustrated embodiment, the dimension L1 of the stacked parts 32a and the dimension L2 of the bridge pieces 36 may be equal to each other in the circumferential direction of the first insulating portion 32. In short, the dimension L1 of the stacked parts 32a can be any value as long as it is less than or equal to the dimension L2 of the bridge pieces 36.

In the illustrated embodiment, the stacked parts 32a may be located at any position as long as it is at a position where the first coil end 251 U of the U-phase coil 25U and the first coil end 251 V of the V-phase coil 25V are not permitted to be short-circuited via the through holes 40h.

In the illustrated embodiment, the bridge pieces 36, 38 may be connected to the first insulating portions 32, 33 and the second insulating portions 34, 35 by being heat-welded to the first insulating portions 32, 33 and the second insulating portions 34, 35.

In the illustrated embodiment, the number of the through holes 40h is not particularly limited.

In the illustrated embodiment, the stacked parts 32a may be heated-welded to each other by a heat-welding means other than the ultrasonic-welding.

The present invention may be applied to motor-driven compressors other than scroll compressors (for example, piston compressors). In such a case, the pistons correspond to compression operation bodies.

Therefore, the present examples and embodiments are to be considered as illustrative and not restrictive and the invention is not to be limited to the details given herein, but may be modified within the scope and equivalence of the appended claims.

## Claims

1. An interphase insulating sheet for a rotating electric machine, wherein
the rotating electric machine (M) includes a stator (13) having an annular stator core (22),
the stator core (22) includes a plurality of teeth (23) and has ends facing opposite directions in an axial direction of the stator core (22),
the teeth (23) are arranged along an inner circumference of the stator core (22) in the circumferential direction,
a slot (24U, 24V, 24W) is formed between adjacent teeth (23),
a coil (25) is wounded about the slot (24U, 24V, 24W)s by wave winding,
the interphase insulating sheet includes
a pair of insulating portions (32-35) that performs interphase insulation between coil ends of the coil (25), which protrude from the ends of the stator core (22), and each insulating portion (32-35) has bridge bases (32k-35k), and
a plurality of bridge pieces (36, 38), each fitted in one of the slot (24U, 24V, 24W)s, wherein each bridge piece extends from one of the bridge bases (32k-35k) of one of the insulating portions (32, 33) to one of the bridge bases (32k-35k) of the other insulating portion (34, 35), wherein
each insulating portion (32-35) has an annular shape and includes stacked parts (32a-35a) that include a respective one of the bridge bases (32k-35k), and the stacked parts (32a-35a) overlap with each other by a predetermined margin,
the interphase insulating sheet being **characterized in that**
in the circumferential direction of each insulating portion (32-35), the dimension (L1) of the stacked parts (32a-35a) is set to be less than or equal to the dimension (L2) of the bridge pieces (36, 38).

2. The interphase insulating sheet according to claim 1, wherein the stacked parts (32a-35a) have a through hole (40h).

3. The interphase insulating sheet according to claim 2, wherein the stacked parts (32a-35a) are located at a position where the coil ends are not permitted to be short-circuited with each other via the through hole (40h).

4. The interphase insulating sheet according to claim 1, wherein in the circumferential direction of each insulating portion (32-35), the dimension (L1) of the stacked parts (32a-35a) is set to be less than the dimension (L2) of the bridge pieces (36, 38).

5. The interphase insulating sheet according to claim 1, wherein the stacked parts (32a-35a) are heat-welded to each other.

6. The interphase insulating sheet according to claim 5, wherein the heat-welding is ultrasonic-welding.

7. A motor-driven compressor, which compresses gas in a compression chamber and discharges the gas by compression operation of a compression operation body (15) based on rotation of a rotary shaft,
wherein the rotary shaft is driven by a rotating electric machine (M) provided with the interphase insulating sheet according to any one of claims 1 to 6.
